# EUROPEAN PATENT APPLICATION

(11) **EP 4 398 397 A1**
(43) Date of publication of application: **10.07.2024**
(21) Application number: 22864326.8
(22) Date of filing: 22.08.2022
(51) Int. Cl.: H01M 50/293, C08F 279/02, C08J 5/18, C08K 5/098, C08K 5/14, C08L 9/02, H01M 10/613, H01M 10/653, H01M 10/6555, H01M 50/204

(54) **BATTERY MODULE SHEET AND BATTERY MODULE**

(30) Priority: 31.08.2021 JP 2021141951
(71) Applicant: Zeon Corporation, Tokyo 100-8246 (JP)
(72) Inventor: MOSAKI Shiho, Tokyo 100-8246 (JP)
(74) Representative: Maiwald GmbH
(86) International application number: PCT/JP2022/031627
(87) International publication number: WO 2023/032742

(57) **Abstract**

Provided is a sheet for battery module that can reduce the occurrence of problems associated with thermal runaway in a battery module. The sheet for battery module is formed of a cross-linked product of a rubber composition that contains a nitrile rubber, an α,β-ethylenically unsaturated carboxylic acid metal salt, and a cross-linker.

## Description

### TECHNICAL FIELD

This disclosure relates to a sheet for battery module and a battery module.

Lithium ion batteries are used in wide range of applications such as in-car application, electric power leveling application, and mobile application from a viewpoint of energy density, output density, durability, etc. In an actual use, lithium ion batteries are often used in a form of a battery module in which a plurality of battery cells are internally arranged. When one battery cell in the battery module has an abnormally high temperature due to any factor to cause thermal runaway, adjacent other battery cells might be adversely affected, which could cause thermal runaway in a chain reaction.

A sheet for battery module to inhibit chain-reaction thermal runaway of a plurality of battery cells has been proposed. For example, Patent Literature (PTL) 1 describes a thermally conductive and thermally expandable resin composition, etc., which are excellent in heat dissipation at the normal operation and start expanding at a relatively low temperature to provide thermal insulation performance that can prevent the ignition by thermal chain reaction to adjacent batteries when the temperature abnormally is elevated.

PTL 2 proposes a thermal runaway prevention sheet that includes at least one of mineral powder and a flame retardant and starts endothermic reaction at a predetermined temperature to cause structural change.

The ways of using a sheet for battery module includes arranging the sheet between adjacent battery cells in a battery module to be an intercell separator. However, for example, in a case of a lithium ion battery, the battery cells may be deformed by expansion, etc. even due to charge and discharge. PTL 3, with this in mind, proposes forming a sheet for battery module of an insulating rubber composition to have a predetermined compressive elastic modulus, in order to increase the ability to follow the deformation of battery cells.

### CITATION LIST

### Patent Literature

PTL 1: WO2018062172A
PTL 2: JP2018206605A
PTL 3: WO2020129274A

### SUMMARY

### (Technical Problem)

In recent years, the demand for safety has increased, and a sheet for battery module that can reduce the occurrence of problems associated with thermal runaway has been still required.

The problems associated with thermal runaway encompass not only a problem that, when a battery cell causes thermal runaway, adjacent battery cells are adversely affected to cause thermal runaway in a chain reaction, but also a problem that, when a battery cell ignites due to thermal runaway, adjacent battery cells and members of the battery module catch fire.

### (Solution to Problem)

This disclosure advantageous resolves the above object and relates to a sheet for battery module, which is formed of a cross-linked product of a rubber composition that contains a nitrile rubber, an α,β-ethylenically unsaturated carboxylic acid metal salt, and a cross-linker.

The sheet for battery module of this disclosure (hereinafter, also referred to as the sheet of this disclosure) is formed of a cross-linked product obtained by cross-linking a nitrile rubber in the presence of an α,β-ethylenically unsaturated carboxylic acid metal salt, the thickness change and stress change at high temperatures are inhibited, and the sheet of this disclosure can effectively prevent the problems associated with thermal runaway.

For example, when the sheet for battery module of this disclosure is arranged between adjacent battery cells, even if a battery cell has an abnormally high temperature to expand, the intercell distance is sufficiently ensured, and the thermal resistance of the sheet increases to inhibit thermal conduction. Thus, it is possible to effectively prevent the induction of thermal runaway at adjacent battery cells.

Moreover, arranging the sheet of this disclosure in proximity to the battery cell can be expected to prevent adjacent battery cells and members from catching fire even if that battery cell ignites.

The battery module is a battery constitutional unit obtained by housing a plurality of battery cells in a housing.

The battery cell is a battery constitutional unit obtained by housing a positive electrode material, a negative electrode material, and an electrolyte in a case member and having a positive electrode tab or a positive electrode terminal, and a negative electrode tab or a negative electrode terminal. No specific limitations are placed on the shape of the cell. The shape of the cell may be a cylinder type, prismatic type, laminated type, coin type, or the like.

The battery is a secondary battery such as a lithium ion battery, lithium ion polymer battery, nickel metal hydride battery, lithium sulfur battery, nickel cadmium battery, nickel iron battery, nickel zinc battery, sodium sulfur battery, lead storage battery, and air battery.

In the sheet of this disclosure, in terms of strength, the α,β-ethylenically unsaturated carboxylic acid metal salt is preferably an α,β-ethylenically unsaturated carboxylic acid zinc salt and is preferably a methacrylic acid metal salt. A methacrylic acid zinc salt is particularly preferable.

The nitrile rubber is preferably a nitrile rubber with an iodine value of 120 or less, in terms of inhibiting the thickness change and stress change of the sheet.

The cross-linker is preferably an organic peroxide cross-linker because the shape of the sheet is easily kept even under high temperature. The cross-linker is preferably 0.5 parts by mass or more and 30 parts by mass or less per 100 parts by mass of the nitrile rubber, in terms of breaking strength and rubber elasticity.

The α,β-ethylenically unsaturated carboxylic acid metal salt is preferably 1 part by mass or more and 200 parts by mass or less per 100 parts by mass of the nitrile rubber, in terms of rubber elasticity.

The sheet of this disclosure is preferable in terms of reaction force buffering of the battery cell, in that the breaking strength is 30.0 MPa or more.

The breaking strength is a value obtained by measuring a test piece punched out from the sheet with a No. 3 dumbbell, in accordance with JISK6251.

The tensile product of the sheet of this disclosure is preferably 1700 MPa•% or more and 15000 MPa•% or less, in terms of inhibiting the thickness change and stress change at high temperatures.

The tensile product is a product of the breaking strength and a breaking elongation. The breaking strength is the above value, and the breaking elongation is a value measured in accordance with JISK6251 using a test piece formed in the same way as in the breaking strength.

This disclosure also relates to a battery module equipped with the above sheet for battery module. It is advantageous in terms of resolving the problems associated with thermal runaway to arrange the above sheet for battery module in proximity to at least one battery cell of the plurality of battery cells contained in the battery module. It is advantageous in terms of preventing chain-reaction thermal runaway to arrange the above sheet for battery module between adjacent battery cells.

### (Advantageous Effect)

The use of the sheet for battery module of this disclosure for the battery module can reduce the occurrence of the problems associated with thermal runaway.

For example, when the sheet for battery module of this disclosure is arranged between adjacent battery cells, even if a battery cell has an abnormally high temperature to expand, the intercell distance is sufficiently ensured, and the thermal resistance increases to inhibit thermal conduction. Thus, it is possible to effectively prevent the induction of thermal runaway at adjacent battery cells. Moreover, arranging the sheet of this disclosure in proximity to the battery cell can be expected to prevent adjacent battery cells and members from catching fire even if that battery cell ignites.

### BRIEF DESCRIPTION OF THE DRAWINGS

In the accompanying drawings:
FIG. 1 schematically illustrates an example of a battery module that uses a sheet for battery module of this disclosure, and the sheet of this disclosure is arranged between battery cells;
FIG. 2 schematically illustrates another example of the battery module that uses the sheet for battery module of this disclosure, and the sheet of this disclosure is arranged in proximity to battery cells; and
FIG. 3 schematically illustrates another use example of the sheet for battery module of this disclosure, and each of a plurality of battery cells is wrapped by the sheet of this disclosure.

### DETAILED DESCRIPTION

The following describes an embodiment of this disclosure in detail.

A sheet for battery module of this disclosure is formed of a cross-linked product of a rubber composition that contains a nitrile rubber, an α,β-ethylenically unsaturated carboxylic acid metal salt, and a cross-linker. The cross-linked product is obtained by cross-linking the nitrile rubber in the presence of the α,β-ethylenically unsaturated carboxylic acid metal salt. A cross-linked structure is formed between the nitrile rubbers, and the cross-linked product has a structure in which an ethylenically unsaturated part of the α,β-ethylenically unsaturated carboxylic acid metal salt chemically binds to the nitrile rubber, which inhibits the thickness change and stress change at high temperatures and can effectively prevent the problems associated with thermal runaway.

The sheet of this disclosure can absorb the deformation including expansion and contraction of the battery cell not only under abnormally high temperature but also at the normal use.

### <Rubber composition>

The rubber composition contains a nitrile rubber, an α,β-ethylenically unsaturated carboxylic acid metal salt, and a cross-linker.

### [Nitrile rubber]

The nitrile rubber is a polymer obtained by polymerizing an α,β-ethylenically unsaturated nitrile monomer and may be a copolymer of the α,β-ethylenically unsaturated nitrile monomer and another monomer that is copolymerizable with the α,β-ethylenically unsaturated nitrile monomer.

### (α,β-ethylenically unsaturated nitrile monomer)

No specific limitations are place on the α,β-ethylenically unsaturated nitrile monomer so long as it is an α,β-ethylenically unsaturated compound having a nitrile group. Examples of the α,β-ethylenically unsaturated nitrile monomer include acrylonitrile; α-halogenoacrylonitrile such as α-chloroacrylonitrile and α-bromoacrylonitrile; and α-alkyl acrylonitrile such as methacrylonitrile. Of these α,β-ethylenically unsaturated nitrile monomers, acrylonitrile and methacrylonitrile are preferable, and acrylonitrile is more preferable.

One α,β-ethylenically unsaturated nitrile monomer may be used individually, or two or more α,β-ethylenically unsaturated nitrile monomers may be used in combination in a freely selected ratio.

The α,β-ethylenically unsaturated nitrile monomer is preferably 20 mass% or more in 100 mass% of the total monomers used for formation of the nitrile rubber. In a case of the copolymer with the other monomer that is copolymerizable with the α,β-ethylenically unsaturated nitrile monomer, the α,β-ethylenically unsaturated nitrile monomer can be 20 mass% or more and 90 mass% or less, is preferably 30 mass% or more, and more preferably 35 mass% or more, and is preferably 80 mass% or less, and more preferably 70 mass%. With these ranges, the nitrile rubber cross-linked product can have excellent rubber elasticity with keeping good heat resistance and chemical stability.

### (Conjugated diene monomer)

When the nitrile rubber is a copolymer of the α,β-ethylenically unsaturated nitrile monomer and the other monomer that is copolymerizable with the α,β-ethylenically unsaturated nitrile monomer, the other monomer that is copolymerizable with the α,β-ethylenically unsaturated nitrile monomer is preferably a conjugated diene monomer in terms of the expression of rubber elasticity.

No specific limitations are placed on the conjugated diene monomer. However, examples of the conjugated diene monomer include 1,3-butadiene, isoprene, 2,3-dimethyl-1,3-butadiene, and 1,3-pentadiene. Of these conjugated diene monomers, 1,3-butadiene, isoprene, etc. are preferable, and 1,3-butadiene, etc. are more preferable.

One conjugated diene monomer may be used individually, or two or more conjugated diene monomers may be used in combination in a freely selected ratio.

The conjugated diene monomer is preferably 10 mass% or more and 80 mass% or less, more preferably 20 mass% or more, and further preferably 30 mass% or more, and is more preferably 70 mass% or less, and further preferably 65 mass% or less, in 100 mass% of the total monomers used for formation of the nitrile rubber. With these ranges, the nitrile rubber cross-linked product can have excellent rubber elasticity with keeping good heat resistance and chemical stability. The conjugated diene monomer may be in a hydrogenated unit in the nitrile rubber.

### (Other monomers)

Other monomers that are copolymerizable with the α,β-ethylenically unsaturated nitrile monomer, other than the conjugated diene monomer (hereinafter, also referred to as other monomers) can include a non-conjugated diene monomer; ethylene, α-olefin monomer; aromatic vinyl monomer; α,β-ethylenically unsaturated monocarboxylic acid and ester thereof; α,β-ethylenically unsaturated polybasic carboxylic acid, and monoester, polyester, or anhydride thereof; cross-linkable monomer; and copolymerizable antioxidant.

No specific limitations are placed on the non-conjugated diene monomer. However, the non-conjugated diene monomer preferably has the number of carbon atoms of 5 to 12. Examples of the non-conjugated diene monomer include 1,4-pentadiene, 1,4-hexadiene, vinyl norbornene, and dicyclopentadiene.

No specific limitations are placed on the α-olefin monomer. However, the α-olefin monomer preferably has the number of carbon atoms of 3 to 12. Examples of the α-olefin monomer include propylene, 1-butene, 4-methyl-1-pentene, 1-hexene, and 1-octene.

No specific limitations are placed on the aromatic vinyl monomer. Examples of the aromatic vinyl monomer include styrene, α-methylstyrene, and vinylpyridine.

No specific limitations are placed on the α,β-ethylenically unsaturated monocarboxylic acid. Examples of the α,β-ethylenically unsaturated monocarboxylic acid include acrylic acid, methacrylic acid, crotonic acid, and cinnamic acid. Examples of the α,β-ethylenically unsaturated monocarboxylic acid ester include alkyl ester thereof. An alkyl ester having the number of carbon atoms of 1 to 8 is preferable. Specifically, examples of the alkyl ester having the number of carbon atoms of 1 to 8 include ethyl (meth)acrylate, butyl (meth)acrylate, and 2-ethylhexyl (meth)acrylate.

Here, "(meth)acryl" is used to indicate "acryl" or "methacryl".

No specific limitations are placed on the α,β-ethylenically unsaturated polybasic carboxylic acid. Examples of the α,β-ethylenically unsaturated polybasic carboxylic acid include maleic acid, fumaric acid, citraconic acid, and itaconic acid. Examples of the α,β-ethylenically unsaturated polybasic carboxylic acid ester include alkyl ester thereof. An alkyl ester having the number of carbon atoms of 1 to 8 is preferable.

Examples of the α,β-ethylenically unsaturated polybasic carboxylic acid monoester include maleic acid monoalkyl ester such as monomethyl maleate, monoethyl maleate, monopropyl maleate, and mono-n-butyl maleate; fumaric acid monoalkyl ester such as monomethyl fumarate, monoethyl fumarate, monopropyl fumarate, and mono-n-butyl fumarate; citraconic acid monoalkyl ester such as monomethyl citraconate, monoethyl citraconate, monopropyl citraconate, and mono-n-butyl citraconate; and itaconic acid monoalkyl ester such as monomethyl itaconate, monoethyl itaconate, monopropyl itaconate, and mono-n-butyl itaconate.

Examples of the α,β-ethylenically unsaturated polybasic carboxylic acid polyester include dimethyl maleate, di-n-butyl maleate, dimethyl fumarate, di-n-butyl fumarate, dimethyl itaconate, and di-n-butyl itaconate.

Examples of the α,β-ethylenically unsaturated polybasic carboxylic acid anhydride include maleic anhydride and itaconic anhydride.

No specific limitations are placed on the cross-linkable monomer. Examples of the cross-linkable monomer include polyfunctional ethylenically unsaturated monomers such as: divinyl compounds such as divinylbenzene; di(meth)acrylic acid esters such as ethylene di(meth)acrylate, diethylene glycol di(meth)acrylate, and ethylene glycol di(meth)acrylate; and trimethacrylic acid esters such as trimethylolpropane tri(meth)acrylate, as well as self-cross-linkable monomers such as N-methylol (meth)acrylamide and N,N'-dimethylol (meth)acrylamide.

No specific limitations are placed on the copolymerizable antioxidant. Examples of the copolymerizable antioxidant include N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinyl benzyloxy)aniline, and N-phenyl-4-(4-vinyl benzyloxy)aniline.

One of the other monomers may be used individually, or two or more of the other monomers may be used in combination in a freely selected ratio. The other monomer is preferably 50 mass% or less, more preferably 40 mass% or less, and further preferably 10 mass% or less in 100 mass% of the total monomers used for formation of the nitrile rubber. The other monomer may be 0 mass%.

The nitrile rubber can be a copolymer of the α,β-ethylenically unsaturated nitrile monomer and the conjugated diene monomer or a copolymer of the α,β-ethylenically unsaturated nitrile monomer, the conjugated diene monomer, and the other monomer. The unit induced from the conjugated diene monomer may be hydrogenated. The nitrile rubber may be a hydrogenated nitrile rubber (including a partial hydrogenated nitrile rubber). The examples and amounts of the respective monomers are as described above.

### (Production of nitrile rubber)

No specific limitations are placed on a method of producing the nitrile rubber. Examples of the method of producing the nitrile rubber include a method of polymerizing the α,β-ethylenically unsaturated nitrile monomer and possibly a method of copolymerizing the α,β-ethylenically unsaturated nitrile monomer and the other monomer that is copolymerizable with the α,β-ethylenically unsaturated nitrile monomer. Examples of the polymerization method include emulsion polymerization, suspension polymerization, bulk polymerization, and solution polymerization. The emulsion polymerization is preferable in terms of ease of controlling the polymerization reaction. Hydrogenation (hydrogenation reaction) can be performed on the obtained polymer (copolymer) to control the iodine value of the nitrile rubber. No specific limitations are placed on the hydrogenation method, and a publicly known method can be employed.

The nitrile rubber can have a Mooney viscosity (ML₁₊₄, 100°C) of 10 or more and 250 or less. The Mooney viscosity is preferably 20 or more, and more preferably 30 or more, and is preferably 200 or less, and more preferably 180 or less.

The Mooney viscosity is a value measured in accordance with JIS K6300-1.

The iodine value of the nitrile rubber is preferably 120 or less, more preferably 60 or less, further preferably 40 or less, and particularly preferably 30 or less. No specific limitations are placed on the lower limit of the iodine value. The lower limit of the iodine value may be 0.

### [α,β-ethylenically unsaturated carboxylic acid metal salt]

No specific limitations are placed on the α,β-ethylenically unsaturated carboxylic acid metal salt. The α,β-ethylenically unsaturated carboxylic acid metal salt can be an α,β-ethylenically unsaturated carboxylic acid metal salt having at least one free carboxyl group. Examples of the α,β-ethylenically unsaturated carboxylic acid metal salt include metal salts of α,β-ethylenically unsaturated monocarboxylic acid, α,β-ethylenically unsaturated polybasic carboxylic acid, and α,β-ethylenically unsaturated polybasic carboxylic acid monoester. The examples and preferred examples described in relation to the nitrile rubber are applied to the α,β-ethylenically unsaturated monocarboxylic acid, the α,β-ethylenically unsaturated polybasic carboxylic acid, and the α,β-ethylenically unsaturated polybasic carboxylic acid monoester.

The α,β-ethylenically unsaturated carboxylic acid metal salt is preferably a metal salt of the α,β-ethylenically unsaturated monocarboxylic acid or the α,β-ethylenically unsaturated polybasic carboxylic acid. A metal salt of (meth)acrylic acid is more preferable in terms of the strength characteristics of the sheet.

No specific limitations are placed on the metal that forms the α,β-ethylenically unsaturated carboxylic acid metal salt. Examples of the metal include zinc, magnesium, calcium, barium, titanium, chromium, iron, cobalt, nickel, aluminum, tin, and lead. Of these metals, zinc, magnesium, calcium, aluminum, etc. are preferable, and zinc is more preferable, in terms of the strength characteristics of the sheet.

The α,β-ethylenically unsaturated carboxylic acid metal salt may be generated by blending an α,β-ethylenically unsaturated carboxylic acid and a metal or a metal compound, which will form the α,β-ethylenically unsaturated carboxylic acid metal salt, into the nitrile rubber to react both materials in the nitrile rubber. The α,β-ethylenically unsaturated carboxylic acid metal salt is generated with such a method, which can successfully disperse the obtained α,β-ethylenically unsaturated carboxylic acid metal salt into the nitrile rubber. Examples of the metal compound include an oxide, hydroxide, and carbonate of the above metal. Of these metal compounds, a zinc oxide and a zinc carbonate are preferable.

When the α,β-ethylenically unsaturated carboxylic acid and the metal or the metal compound are blended into the nitrile rubber to generate the α,β-ethylenically unsaturated carboxylic acid metal salt in the nitrile rubber, in terms of the fact that the reaction between the unsaturated carboxylic acid and the metal or the metal compound is likely to occur, the metal or the metal compound is blended with an amount of preferably 0.1 mol or more and 4 mol or less, and more preferably 0.3 mol or more and 3 mol or less per 1 mol of the α,β-ethylenically unsaturated carboxylic acid to react these materials. However, when zinc oxide, zinc carbonate, zinc hydroxide, or the like is used as the metal compound, these metal compounds individually functions as a cross-linking promotor as a compounding agent of the rubber and thus can be used above the upper limit of the above range.

The α,β-ethylenically unsaturated carboxylic acid metal salt is preferably fine. In particular, the content of particles with a particle diameter of 20 µm or more is preferably 5% or less on a volume basis.

To form the α,β-ethylenically unsaturated carboxylic acid metal salt (B) into fine particles, a method of classifying the α,β-ethylenically unsaturated carboxylic acid metal salt using a wind force classifier, a sieve classifier, or the like may be used.

When the α,β-ethylenically unsaturated carboxylic acid and the metal or the metal compound are blended into the nitrile rubber to generate the α,β-ethylenically unsaturated carboxylic acid metal salt, the use of the metal or the metal compound classified using a wind force classifier, a sieve classifier, or the like can make the α,β-ethylenically unsaturated carboxylic acid metal salt fine.

The α,β-ethylenically unsaturated carboxylic acid metal salt is preferably 1 part by mass or more and 200 parts by mass or less, and more preferably 10 parts by mass or more and 150 parts by mass or less per 100 parts by mass of the nitrile rubber.

### [Cross-linker]

No specific limitations are placed on the cross-linker. Cross-linkers used for cross-linking the nitrile rubber can be used. Examples of the cross-linker include an organic peroxide cross-linker and a sulfuric cross-linker. Of these cross-linkers, the organic peroxide cross-linker is preferable.

No specific limitations are placed on the organic peroxide cross-linker. Examples of the organic peroxide cross-linker include dicumyl peroxide, cumene hydroperoxide, t-butyl cumyl peroxide, para-menthane hydroperoxide, di-t-butylperoxide, 1,3-bis(t-butylperoxy isopropyl)benzene, 1,4-bis(t-butylperoxy isopropyl)benzene, 1,1-di-t-butylperoxy-3,3-trimethylcyclohexane, 4,4-bis-(t-butyl-peroxy)-n-butylvalerate, 2,5-dimethyl-2,5-di-t-butylperoxy hexane, 2,5-dimethyl-2,5-di-t-butylperoxy hexane-3, 1,1-di-t-butylperoxy-3,5,5-trimethylcyclohexane, p-chlorobenzoyl peroxide, t-butylperoxyisopropyl carbonate, and t-butylperoxy benzoate. However, 1,3-bis(t-butylperoxy isopropyl)benzene, 1,4-bis(t-butylperoxy isopropyl)benzene, etc. are preferable in terms of heat resistance and rubber elasticity. One organic peroxide cross-linker may be used individually, or two or more organic peroxide cross-linkers may be used in combination in a freely selected ratio.

The organic peroxide cross-linker can be used with 0.5 parts by mass or more and 30 parts by mass or less, is preferably 1 part by mass or more, and is, in terms of breaking strength, preferably 20 parts by mass or less, per 100 parts by mass of the nitrile rubber.

### [Other components]

Other components may be added to the rubber composition, in addition to the nitrile rubber, the α,β-ethylenically unsaturated carboxylic acid metal salt, and the cross-linker. Rubber components other than the nitrile rubber may be blended into the rubber composition within a range in which the effects of this disclosure are not impaired.

### (Co-cross-linker)

The other components include a co-cross-linker. No specific limitations are placed on the co-cross-linker. However, a low molecular or high molecular compound having a plurality of radical reactive unsaturated groups in a molecule is preferable. Examples of the co-cross-linker include polyfunctional vinyl compounds such as divinylbenzene and divinylnaphthalene; isocyanurates such as triallyl isocyanurate and trimethallyl isocyanurate; cyanurates such as triallyl cyanurate; maleimides such as N,N'-m-phenylenedimaleimide; allylic esters of polyacids such as diallyl phthalate, diallyl isophthalate, diallyl maleate, diallyl fumarate, diallyl sebacate, and triallyl phosphate; diethylene glycol bisallyl carbonate; allyl ethers such as ethylene glycol diallyl ether, triallyl ether of trimethylolpropane, and partial allyl ether of pentaerythritol; allyl modified resins such as allylated novolak and allylated resol resin; and trifunctional to pentafunctional methacrylate compounds or acrylate compounds such as trimethylolpropane trimethacrylate and trimethylolpropane triacrylate. Of these co-cross-linkers, trifunctional to pentafunctional methacrylate compounds and acrylate compounds are preferable, and trimethylolpropane trimethacrylate is more preferable, in terms of rubber elasticity and hardness.

When the co-cross-linker is used, the co-cross-linker can be 1 part by mass or more and 20 parts by mass or less per 100 parts by mass of the nitrile rubber. The co-cross-linker is preferably 3 parts by mass or more in terms of rubber elasticity. The co-cross-linker is preferably 10 parts by mass or less in terms of breaking elongation.

### (Various compounding agents)

Examples of the other components include various compounding agents, which are publicly known in the rubber field. Examples of the compounding agents include a reinforcing agent, filler, antioxidant, light stabilizer, antiscorching agent, plasticizer, processing aid, lubricant, adhesive, lubricant agent, flame retardant, acid acceptor, fungicide, antistatic agent, colorant, silane coupling agent, cross-linking aid, cross-linking retardant, and foaming agent. The amounts of these compounding agents may be set in accordance with the objective of blending.

### [Production of composition]

The composition can be prepared by mixing the above respective components. No specific limitations are placed on a method of preparing the composition. However, in general, the composition can be prepared by performing primary kneading on components except for the cross-linker and thermally unstable components (co-cross-linker, cross-linking aid, etc.) in a mixer such as a Banbury mixer, an inter mixer, and a kneader and then performing secondary kneading by transferring the components to a roll, etc. and adding the cross-linker and thermally unstable components thereto. When the α,β-ethylenically unsaturated carboxylic acid metal salt is generated in the nitrile rubber, these materials can be used for producing the composition without separating them.

The primary kneading can be performed at 20°C or more and 200°C or less. The temperature at which the primary kneading is performed is preferably 50°C or more and is preferably 170°C or less. The kneading time can be set as appropriate.

The secondary kneading can be performed at 20°C or more and 100°C or less. The temperature at which the secondary kneading is performed is preferably 30°C or more and is preferably 80°C or less. The kneading time can be set as appropriate.

### <Cross-linked product>

The cross-linked product can be formed into a sheet by preparing the rubber composition, and shaping it into a sheet and cross-linking it after the shaping, or cross-linking it at the same time of the shaping.

It is possible to obtain a sheet by shaping the composition with a forming machine corresponding to a desired shape, for example, an extruder, an injection molder, a compactor, or a roll, performing crosslinking reaction by heating to form a nitrile rubber cross-linked product, and fixing its shape in a sheet form. The composition may be cross-linked after preliminarily shaping it into a sheet or may be cross-linked at the same time of the shaping into a sheet.

The shaping temperature can be 100°C or more and 200°C or less and is preferably 130°C or more and 190°C or less. The shaping time can be 1 minute or more and 24 hours or less and is preferably 2 minutes or more and 1 hour or less.

Secondary cross-linking may be performed by further heating the sheet. No specific limitations are placed on a heating method. Examples of the heating method include press heating, steam heating, oven heating, and hot air heating.

### <Sheet for battery module>

No specific limitations are placed on the thickness of the sheet for battery module of this disclosure. The thickness can be 0.1 mm or more and 50 mm or less. The thickness is preferably 0.5 mm or more in terms of preventing the problems at the time of thermal runaway. The thickness is preferably 30 mm or less in terms of battery capacity.

The breaking strength of the sheet of this disclosure is preferably 30.0 MPa or more, and more preferably 35.0 MPa or more. The breaking strength is preferably 100.0 MPa or less, and more preferably 80.0 MPa or less.

The tensile product of the sheet of this disclosure is preferably 1700 MPa•% or more and 15000 MPa•% or less, and more preferably 2000 MPa•% or more and 10000 MPa•% or less.

The breaking elongation can be 1% or more and 1000% or less and is preferably 50% or more and 500% or less.

The thermal conductivity of the sheet of this disclosure is preferably 1 W/m •K or less, and more preferably 0.7 W/m•K or less. No specific limitations are placed on the lower limit of the thermal conductivity. However, the lower limit of the thermal conductivity can be 0.01 W/m•K or more.

The thermal conductivity is a value measured in accordance with ASTM D5470.

The sheet of this disclosure can be used in a battery module. The sheet of this disclosure is preferably arranged in proximity to a battery cell in the battery module and more preferably arranged directly in contact with the battery cell.

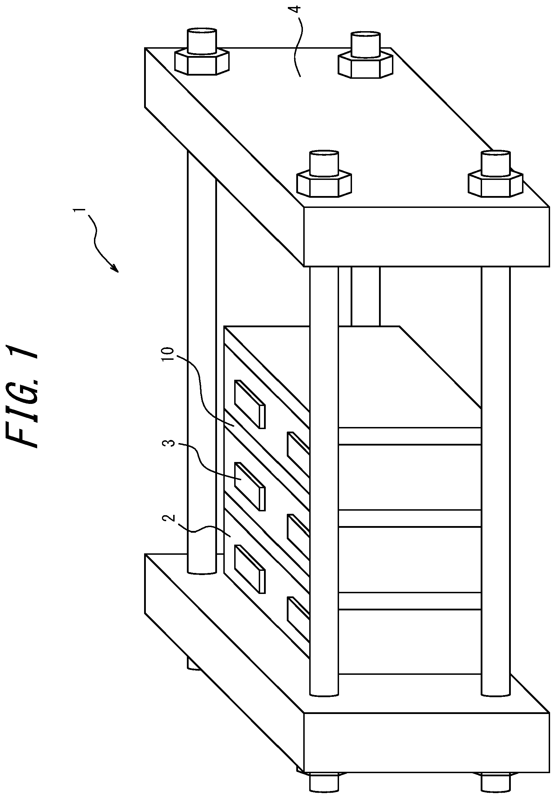

For example, as illustrated in FIG. 1, the sheet of this disclosure can be arranged between adjacent battery cells to be an intercell spacer. Such a structure can insulate adjacent battery cells one another to prevent chain-reaction thermal runaway and also can prevent adjacent battery cells from catching fire when a battery cell ignites.

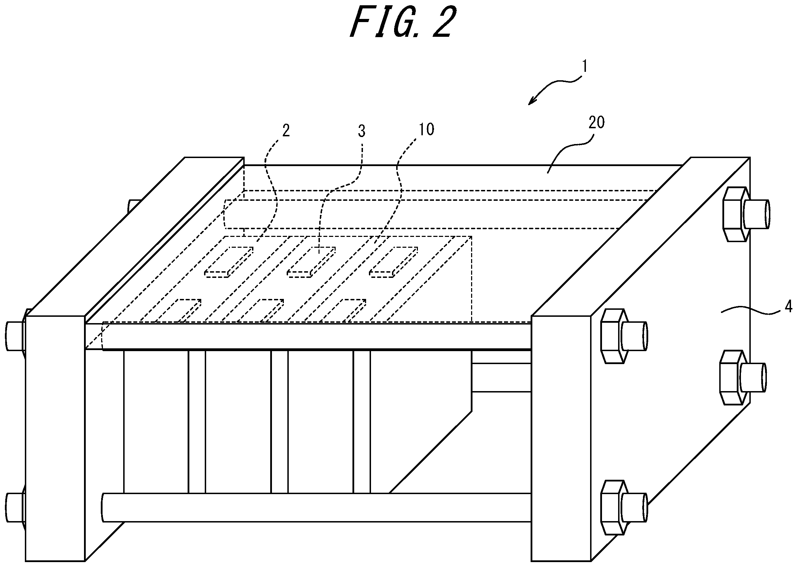

As illustrated in FIG. 2, the sheet of this disclosure can be arranged in proximity to battery cells. This can cause the sheet of this disclosure to function as a fire prevention sheet. When a battery cell ignites, the sheet of this disclosure can prevent other members in the battery module and other battery modules from catching fire.

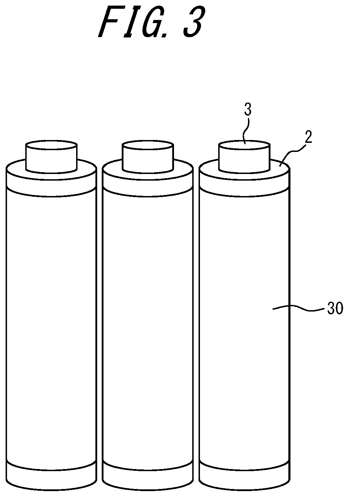

As illustrated in FIG. 3, the sheet of this disclosure can be wrapped around each battery cell to be an intercell film. Such a structure can insulate adjacent battery cells one another to prevent chain-reaction thermal runaway and also can prevent adjacent battery cells from catching fire when a battery cell ignites.

### EXAMPLES

The present disclosure is described in more detail below through examples. However, this disclosure is not limited to these examples. In the examples, part, %, and ppm indicate part by mass, mass%, and mass ppm, respectively, unless otherwise noted.

Evaluations of examples and comparative examples were performed as described below.

### <Breaking strength and breaking elongation>

Each sheet in the examples and comparative examples was punched out with a No. 3 dumbbell to form a test piece, and the breaking strength and breaking elongation of the rubber cross-linked product were measured in accordance with JIS K6251.

### <Distance between spacers>

Each sample for measuring the distance between spacers was formed by sandwiching each sheet in the examples and comparative examples with two aluminum plates (ϕ33 mm × thickness 3 mm) on the top and bottom and pressing the sheet at 5 MPa.

For each sample, the distance between the aluminum plates under a pressure of 5 MPa was measured. Subsequently, the sample was heated at 300°C for 1 hour under a pressure of 5 MPa. After the heating, the distance between the aluminum plates under a pressure of 5 MPa was measured.

The evaluation of the distance between spacers was performed as described below. The following evaluation of "Good" indicates that the presence of the sheet can ensure the distance between the battery cells and the distance between the battery cell and other members even under abnormally high temperature.

The distance after heating is 50% or more of the distance before heating: Good

The distance after heating is less than 50% of the distance before heating: Poor

### <Fireproof test>

Two lithium ion battery cells were stacked as a sample, and each sheet in the examples and comparative examples was arranged between the cells as an intercell spacer and fixed by metal plates from the outside.

The side surface of one side battery cell was hit by a nail to forcibly cause thermal runaway, and it was confirmed whether the other battery cell caught fire from that battery cell.
No fire at the other battery: Good
Fire at the other battery: Poor

Components used for producing each sheet in the examples and comparative examples are as described below.

### <Nitrile rubber>

The used nitrile rubber is a high saturated nitrile rubber that was synthesized as described below.

In a reactor, 0.2 parts of sodium carbonate was dissolved into 200 parts of deionized water, and 2.25 parts of fatty acid potassium soap (potassium salt of fatty acid) was added thereto to prepare a soapy aqueous solution. Then, 37 parts of acrylonitrile and 0.47 parts of t-dodecyl mercaptan (molecular weight modifier) were added to the soapy aqueous solution in this order, the internal gas was substituted by nitrogen 3 times, and 63 parts of 1,3-butadiene was then added thereto. Subsequently, the temperature in the reactor was kept at 5°C, 0.1 parts of cumene hydroperoxide (polymerization initiator), a reductant, and a moderate amount of chelating agent were added thereto, and polymerization reaction was then performed for 16 hours while keeping the temperature at 5°C. Subsequently, 0.1 parts of hydroquinone (polymerization terminator) aqueous solution with a concentration of 10% was add thereto to stop the polymerization reaction, and residual monomers were removed using a rotary evaporator with a water temperature of 60°C to obtain latex (solid content concentration: about 25%) of the nitrile rubber.

Subsequently, the latex obtained as above was added into an aqueous aluminum sulfate solution with an amount of 3% with respect to the dry weight of the rubber contained in the latex and stirred to solidify the latex. After the latex was isolated by filtration while washing it with water, the latex was subjected to vacuum drying at 60°C for 12 hours to obtain a nitrile rubber. Then, the obtained nitrile rubber was dissolved in acetone to have a concentration of 12% and then put in an autoclave. A palladium silica catalyst was added thereto with 200 ppm with respect to the nitrile rubber, and hydrogenation reaction was then performed at a hydrogen pressure of 3 MPa. After the end of the hydrogenation reaction, the reactant was poured into a large volume of water to solidify it, and isolated by filtration and dried to obtain a high saturated nitrile rubber. For the composition of the obtained high saturated nitrile rubber, the acrylonitrile unit was 36.2%, the butadiene unit (including a saturated part) was 63.8%, and the iodine value was 28. The Mooney viscosity (ML₁₊₄, 100°C) measured in accordance with JIS K6300-1 was 77.

### <Carbon black>

Produced by Tokai Carbon Co., Ltd.; Product name: Seast SO
<1,3- and 1,4-bis(t-butylperoxyisoproyl)benzene 40% product>

Peroxide content: 40 mass%; Carrier (kaolin): 60 mass%

### <Example 1>

Using a Banbury mixer, 85 parts of methacrylic acid zinc salt was added to 100 parts of the above high saturated nitrile rubber to be mixed at 50°C for 5 minutes. Subsequently, the obtained mixture was transferred to a roll with a temperature of 50°C, and 6 parts of 1,3- and 1,4-bis(t-butylperoxyisoproyl)benzene 40% product was added thereto and kneaded to obtain a nitrile rubber composition.

The obtained nitrile rubber composition was put into a mold with 15 cm in length, 15 cm in width, and 0.2 cm in depth, and press molded at 170°C for 20 minutes while being pressured at a pressing pressure of 10 MPa to obtain a sheet-shaped cross-linked product.

The evaluation results of the obtained sheet are presented in Table 1.

### <Examples 2 and 3 and Comparative Examples 1 and 2>

Each sheet was obtained in the same way as in Example 1 except that the components and amounts were changed as presented in Table 1, and the temperature and time of the cross-link condition were as presented in Table 1. The evaluation results of each sheet are presented in Table 1.

**[Table 1]**

| | | Example 1 | Example 2 | Example 3 | Comparative Example 1 | Comparative Example 2 |
|---|---|---|---|---|---|---|
| Component (part by mass) | High saturated nitrile rubber | 100 | 100 | 100 | 100 | 100 |
| | Methacrylic acid zinc salt | 85 | 47.5 | 30 | - | - |
| | Carbon black | - | - | - | - | 40 |
| | 1,3-, 1,4-bis(t-butylperoxyisoproyl)benzene 40% product | 11.1 | 8.8 | 7.8 | 6 | 6 |
| Shaping | Cross-link condition | 170°C × 20 min | 170°C × 20 min | 170°C × 20 min | 170°C × 20 min | 170°C × 20 min |
| Evaluation | Breaking strength (MPa) | 43.2 | 36.4 | 35.8 | 5.43 | 26.4 |
| | Breaking elongation (%) | 90 | 130 | 250 | 280 | 410 |
| | Tensile product (MPa•%) | 3888 | 4732 | 8950 | 1520 | 10824 |
| | Distance between spacers | Good | Good | Good | Poor | Poor |
| | Fireproof test | Good | Good | Good | Poor | Poor |

It is found that the sheet for battery module of this disclosure can ensure the distance between the battery cells and the distance between the battery cell and other members even under abnormally high temperature.

### INDUSTRIAL APPLICABILITY

The use of the sheet for battery module of this disclosure for the battery module can reduce the occurrence of the problems associated with thermal runaway. The battery module of this disclosure has high safety and is useful in wide range of applications such as in-car application, electric power leveling application, and mobile application.

### REFERENCE SIGNS LIST

- 1: battery module
- 2: cell
- 3: electrode terminal
- 4: support member
- 10: intercell spacer
- 20: fire prevention sheet
- 30: intercell film

## Claims

1. A sheet for battery module, being formed of a cross-linked product of a rubber composition that contains a nitrile rubber, an α,β-ethylenically unsaturated carboxylic acid metal salt, and a cross-linker.

2. The sheet for battery module according to claim 1, wherein the α,β-ethylenically unsaturated carboxylic acid metal salt is an α,β-ethylenically unsaturated carboxylic acid zinc salt.

3. The sheet for battery module according to claim 1, wherein the α,β-ethylenically unsaturated carboxylic acid metal salt is a methacrylic acid metal salt.

4. The sheet for battery module according to claim 1, wherein the nitrile rubber is a nitrile rubber having an iodine value of 120 or less.

5. The sheet for battery module according to claim 1, wherein the cross-linker is an organic peroxide.

6. The sheet for battery module according to claim 1, wherein the cross-linker is 0.5 parts by mass or more and 30 parts by mass or less per 100 parts by mass of the nitrile rubber.

7. The sheet for battery module according to claim 1, wherein the α,β-ethylenically unsaturated carboxylic acid metal salt is 1 part by mass or more and 200 parts by mass or less per 100 parts by mass of the nitrile rubber.

8. The sheet for battery module according to claim 1, wherein the sheet has a breaking strength of 30.0 MPa or more.

9. The sheet for battery module according to claim 1, wherein the sheet has a tensile product of 1700 MPa•% or more and 15000 MPa•% or less.

10. A battery module comprising the sheet for battery module according to any one of claims 1 to 9.

11. The battery module according to claim 10, comprising a plurality of battery cells, wherein the sheet for battery module is arranged in proximity to at least one battery cell.

12. The battery module according to claim 10, comprising a plurality of battery cells, wherein the sheet for battery module is arranged between adjacent battery cells.
